**Europäisches Patentamt**

**European Patent Office**

**Office européen des brevets**

(19)

(11) Veröffentlichungsnummer: **0 224 502**
**B1**

(12) **EUROPÄISCHE PATENTSCHRIFT**

(45) Veröffentlichungstag der Patentschrift:
**10.08.88**

(21) Anmeldenummer: **86902802.7**

(22) Anmeldetag: **14.05.86**

(86) Internationale Anmeldenummer:
**PCT/DE 86/00203**

(87) Internationale Veröffentlichungsnummer:
**WO 86/07424 (18.12.86 Gazette 86/27)**

(51) Int. Cl.⁴: **F 16 H 27/02**

(54) SCHRITTSCHALTWERK.

(30) Priorität: **12.06.85 DE 3521011**

(43) Veröffentlichungstag der Anmeldung:
**10.06.87 Patentblatt 87/24**

(45) Bekanntmachung des Hinweises auf die Patenterteilung:
**10.08.88 Patentblatt 88/32**

(84) Benannte Vertragsstaaten:
**CH DE FR GB IT LI**

(56) Entgegenhaltungen:
**FR-A-1 326 123**
**US-A-2 594 828**
**US-A-3 161 070**
**US-A-3 762 228**

(73) Patentinhaber: **ROBERT BOSCH GMBH, Postfach 50, D-7000 Stuttgart 1 (DE)**

(72) Erfinder: **ZIERINGER, Josef, Frauenstrasse 5, D-7335 Salach (DE)**

LIBER, STOCKHOLM 1988

## Beschreibung

### Stand der Technik

Die Erfindung geht aus von einem doppelseitig wirkenden Schrittschaltwerk nach der Gattung des Hauptanspruchs. Solche Schrittschaltwerke dienen zum schrittweisen Drehen eines Zahnrades, mit dessen Welle ein zu positionierendes Maschinenelement, beispielsweise ein Teilemagazin oder dergleichen, über ein Getriebe verbunden ist. In "Bauelemente der Feinmechanik", Richter und Voss, 1959, sind auf Seite 477 Schrittschaltwerke mit zwei Rädern angegeben, deren Achsen sich kreuzen. Das treibende Rad trägt an seiner Mantelfläche zwei parallele Rippen, die durch ein schräges Zwischenstück verbunden sind. Diese Rippen greifen in entsprechende Lücken des angetriebenen Zahnrades ein. Beim Drehen des treibenden Rades wird das Zahnrad nur dann weitergeschaltet, wenn das schräge Zwischenstück zum Eingriff gelangt. Der Schaltweg entspricht dem Abstand der beiden parallelen Rippen. Nach dem Schalten ist das Zahnrad wieder gesperrt. Angewendet werden solche Schrittschaltwerke vorwiegend in der Kinotechnik zum Weiterschalten des Bildbandes um jeweils ein Bild. Sie setzen eine verhältnismäßig enge Zahnteilung voraus, was ihr Anwendungsspektrum stark einschränkt.

Durch die US-A-3 161 070 entsprechend dem Oberbegriff von Anspruch 1 ist ein doppelseitig wirkendes Schrittschaltwerk mit einem Zahnrad und einem translatorisch zwischen Endlagen hin- und herbewegbaren Schieber bekannt geworden. Der Schieber hat zwei Zahnleitflächen, die dafür sorgen, daß das Zahnrad sowohl in der einen als auch in der anderen Bewegungsrichtung des Schiebers jeweils um eine Zahnteilung weitergeschaltet wird. Die Zahnleitflächen sind als Einzelteile am Schieber befestigt. Für Unterschiedliche Zahnteilungen ist jeweils ein besonderer Teilesatz mit entsprechend bemessenen Leitflächen erforderlich.

Es gibt ferner Einzahngetriebe, von denen das Malteserkreuzgetriebe das bekannteste ist. Hier trägt das treibende Rad anstelle eines Zahns einen Zapfen, während das getriebene Rad, das sogenannte Sternrad, vier Schlitze aufweist. Zum Sichern der Rastlagen ist das treibende Rad mit einem zylindrischen Ansatz versehen, der in jeder Rastlage in eine Ausnehmung des Sternrads eingreift. Solche Getriebe erfordern eine sehr genaue Herstellung. Die Räder bestehen in der Regel aus Präzisionsfrästeilen, deren einander berührende Flächen einer Feinbearbeitung unterzogen werden, um die Reibung zu verringern.

Schließlich sind noch Zahnklinkenschaltwerke bekannt, bei denen das schrittweise Weiterschalten eines Zahnrads durch ein schwingendes Glied bewerkstelligt wird, das mit einer Klinke in die Zähne des Zahnrads eingreift.

Da das Zahnrad beim Zurückschwingen des Glieds nicht gesichert ist, muß eine besondere Sperrklinke angebracht werden, die in entsprechende Zahnlücken des Zahnrads eingreift. Während bei den Klinkenschaltwerken mit einer Schaltklinke und einer Sperrklinke das schwingende Schaltglied beim Vorwärtsgang das Zahnrad über die Schaltklinke mitnimmt und damit schaltet, beim Rückwärtsgang dagegen leerläuft und das Zahnrad in Ruhe ist, wird bei Klinkenschaltwerken mit zwei Schaltklinken das Zahnrad in beiden Schwingrichtungen des Schaltglieds weitergeschaltet. Dabei schaltet jeweils eine Schaltklinke, während die andere leerläuft.

### Vorteile der Erfindung

Das erfindungsgemäße Schrittschaltwerk mit den kennzeichnenden Merkmalen des Hauptanspruchs hat demgegenüber den Vorteil, daß es nur eine Schaltklinke benötigt, um das Zahnrad in beiden Bewegungsrichtungen des Schiebers um jeweils eine Zahnteilung weiterzuschalten. Es hat einen einfachen, robusten Aufbau, der keine feinbearbeiteten Präzisionsbauteile benötigt und hinsichtlich Toleranzen unkritisch ist. Ein weiterer Vorteil besteht darin, daß das Schrittschaltwerk durch entsprechende Schrägstellung und/ oder Länge der Zahnleitfläche der Schaltklinke ohne Schwierigkeiten an Zahnräder mit unterschiedlicher Zahnteilung anpaßbar ist.

Durch die in den Unteransprüchen aufgeführten Maßnahmen sind vorteilhafte Weiterbildungen und Verbesserungen des im Hauptanspruch angegebenen Schrittschaltwerks möglich. Besonders vorteilhaft für die Vorgabe der Klinkenstellung ist es, daß die beiden den Schwenkweg der Schaltklinke begrenzenden und den Schrägstellwinkel der Zahnleitfläche bestimmenden Anschläge in der Bewegungsbahn eines mit der Schaltklinke drehfest verbundenen Hebelarms angeordnet sind. Das Überführen der Schaltklinke in ihre beiden Arbeitsstellungen läßt sich auf einfache Weise dadurch bewerkstelligen, daß in der Bewegungsbahn eines weiteren Hebelarms der Schaltklinke zwei maschinen-feste Anschläge zum Umschalten der Schaltklinke auf entgegengesetzte Schrägstellung ihrer Zahnleitfläche vorgesehen sind. Um das Zahnrad nach dem Weiterschalten in seiner jeweiligen Drehlage zu sichern ist es zweckmäßig, daß der die Schaltklinke tragende Schieber zwei in Bewegungsrichtung des Schiebers verlaufende, spiegelsymmetrische und einseitig offene Schlitze zur Aufnahme desjenigen Zahnes des Zahnrads hat, welcher dem von der Zahnleitfläche der Schaltklinke jeweils erfaßten Zahn folgt.

### Zeichnung

Ein Ausführungsbeispiel der Erfindung ist in der Zeichnung dargestellt und in der nachfolgenden Beschreibung näher erläutert. Es zeigen Figur 1 eine vereinfachte, teilweise im Schnitt gezeichnete Ansicht des Schrittschaltwerks mit in seiner einen Endlage befindlichem Schieber, Figur 2 das Schrittschaltwerk während der Durchführung eines Schaltschritts, Figur 3 die Anordnung nach Beendigung des Schaltschritts, wobei der Schieber seine andere Endlage einnimmt.

Beschreibung des Ausführungsbeispiels

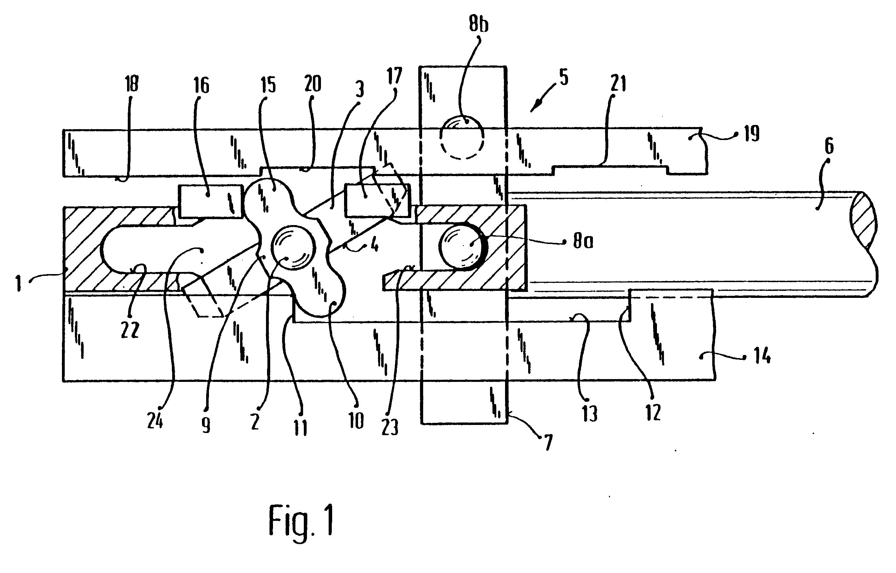

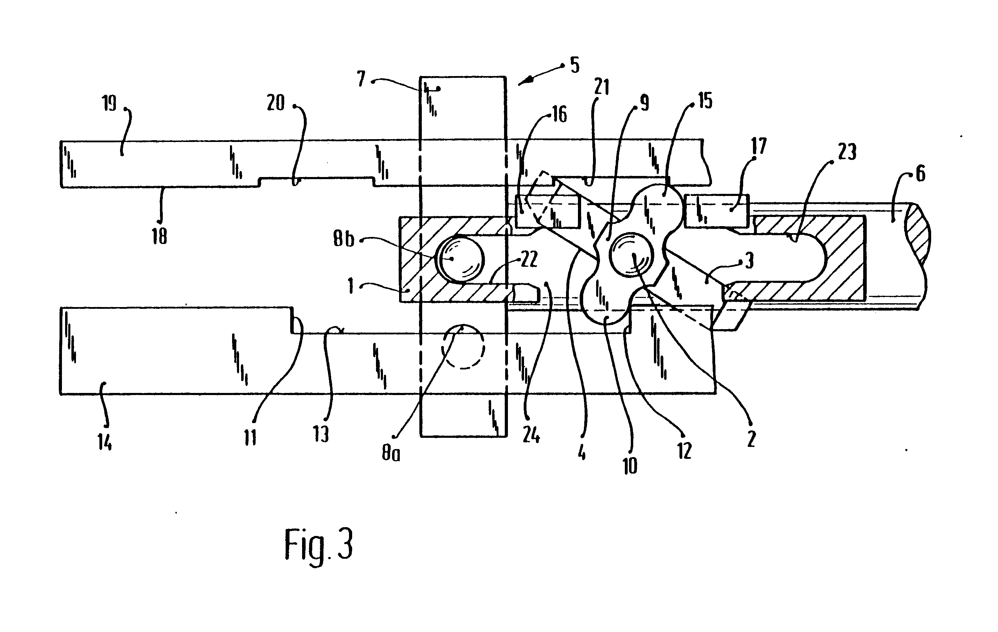

In den Figuren ist mit 1 ein aus einem Metallblock bestehender Schieber bezeichnet, welcher zwischen den in den Figuren 1 und 3 dargestellten Endlagen hin- und herbeweglich ist. Der Schieber 1 hat an seiner Unterseite einen Lagerzapfen 2 für eine zweiarmige Schaltklinke 3, deren als Zahnleitfläche 4 dienende Kante mit eine Zahnrad 5 zusammenarbeitet, das an einer Welle 6 befestigt ist. Die Bewegung des Schiebers 1 verläuft rechtwinkelig zur Drehebene des Zahnrads 5. Das Zahnrad ist im Ausführungsbeispiel als Zapfenrad ausgebildet, bei dem am Umfang eines zylindrischen Grundkörpers 7 mehrere, beispielsweise zwölf, Zapfen in gleichem Winkelabstand voneinander angeordnet sind. In den Figuren sind der Übersichtlichkeit wegen nur zwei aufeinanderfolgende Zapfen 8a und 8b eingezeichnet. Die Zahnleitfläche 4 der Schaltklinke 3 ist mit Bezug auf die Bewegungsrichtung des Schiebers 1 schräggestellt. Der Schrägstellwinkel und/oder die Länge der Zahnleitfläche 4 richtet sich nach der Zahnteilung. Je größer diese ist, d.h. je weniger Zapfen 8 das Zahnrad 5 hat, desto größer ist der Schrägstellwinkel der Zahnleitfläche 4 bei gleichbleibender Länge derselben.

Wie ein Vergleich der Figuren 1 und 3 zeigt, wird die Schaltklinke 3 nach jedem Schaltzyklus in entgegengesetzte Schrägstellung umgeschaltet. Hierzu sitzt auf dem Lagerzapfen 2 der Schaltklinke 3 ein mit dieser drehfest verbundener zweiarmiger Hebel 9. Im Bewegungsweg des Hebelarms 10 befinden sich zwei maschinenfeste Anschläge 11 und 12, die als Kanten einer Aussparung 13 an einer Schiene 14 ausgebildet sind.

Diese Schiene kann als Leitschiene und Niederhalter für den Schieber 1 dienen.

Der andere Hebelarm 15 des rechtwinkelig zur Schaltklinke 3 angeordneten Hebels 9 arbeitet mit zwei Anschlagklötzen 16, 17 des Schiebers 1 zusammen, welche den Schwenkweg der Schaltklinke 3 begrenzen und den Schrägstellwinkel der Zahnleitfläche 4 bestimmen. Damit die Schaltklinke 3 dem beim Weiterschalten des Zahnrads 5 vom Zapfen 8a bzw. 8b auf die Zahnleitfläche 4 ausgeübten Druck nicht nachgeben kann, stützt sich der Hebelarm 15 während der Schaltschritte an der Kante 18 einer maschinenfesten Schiene 19 ab. Die Schiene 19 hat im Bereich der Kante zwei Aussparungen 20, 21, die den erforderlichen Freiraum zum Schwenken des Hebels 9 am Ende der Schaltschritte schaffen.

Um das Zahnrad 5 nach erfolgtem Weiterschalten in seiner Drehlage zu sichern, hat der Schieber 1 an seiner Unterseite zwei einseitig offene, an den Durchmesser der Zapfen 8a, 8b angepaßte Schlitze 22, 23, die sich in Bewegungsrichtung des Schiebers - durch eine Freisparung 24 zur Aufnahme der Schaltklinke 3 und des Hebels 9 voneinander getrennt in Bewegungsrichtung des Schiebers gegenüberliegen. Der Schlitz 22 bzw. 23 nimmt jeweils den Zapfen des Zahnrads 5 auf, welcher dem von der Zahnleitfläche 4 der Schaltklinke 3 erfaßten Zapfen folgt.

Das beschriebene Schrittschaltwerk arbeitet wie folgt:

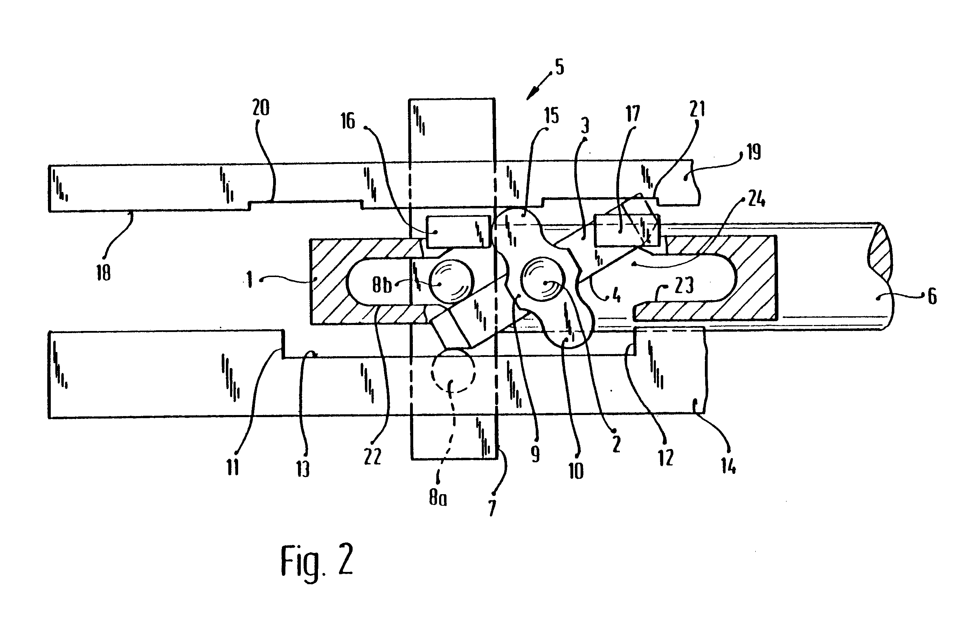

Ausgehend von der in Figur 1 gezeigten Ausgangslage wird der Schieber 1 zum Weiterschalten des Zahnrads 5 um eine Zahnteilung nach rechts bewegt. Dabei kommt die Zahnleitfläche 4 der Schaltklinke 3 zur Anlage an dem Zapfen 8a, nachdem ihn der Schlitz 23 des Schiebers 1 freigegeben hat. Die Zahnleitfläche 4 verdrängt den Zapfen 8a und verursacht dadurch ein Drehen des Zahnrads 5. Die Breite der Schaltklinke 3 ist so gewählt, daß sie in den Raum zwischen zwei benachbarten Zapfen des Zahnrads 5 paßt. Figur 2 zeigt eine Phase des Schaltschrittes, in welcher die Zahnleitfläche 4 den weitergeschalteten Zapfen 8a gerade verläßt und der folgende Zapfen 8b dem Schlitz 22 des Schiebers 1 gegenübersteht. Wie aus dieser Figur ferner ersichtlich ist, stützt sich der Arm 15 des Hebels 9 an der Kante 18 der Schiene 19 ab und verhindert dadurch ein ungewolltes Schwenken der Schaltklinke 3 durch den an der Zahnleitfläche 4 anliegenden Zapfen 8a.

Wird die Bewegung des Schiebers 1 nach rechts fortgesetzt, so trifft der Arm 10 des Hebels 9 auf die maschinenfeste Anschlagkante 12, nachdem der Schlitz 22 den Zapfen 8b umfaßt und das Zahnrad 5 in seiner Schaltstellung gesichert hat. Die Kante 12 sorgt dafür, daß die Schaltklinke 3 in der Endphase der Schieberbewegung in die in Figur 3 dargestellte Schrägstellung überwechselt, welche durch den Anschlagklotz 17 vorgegeben ist. Das Schwenken der Schaltklinke 3 wird durch die Aussparung 21 in der Schiene 19 ermöglicht.

Wird der Schieber 1 nunmehr nach links bewegt, so erfaßt die Zahnleitfläche 4 der Schaltklinke 3 den zuvor im Schlitz 22 befindlichen Zapfen 8b und dreht das Rad 5 in gleicher Richtung wie zuvor um eine weitere Zahnteilung. Der folgende nicht dargestellte Zapfen wird am Ende der Schaltbewegung vom Schlitz 23 des Schiebers 1 umfaßt, der das Zahnrad 5 bis zum nächsten Schaltvorgang arretiert.

Zum Bewegen des Schiebers 1 ist nur ein Antriebselement, beispielsweise ein Pneumatik- oder Hydraulikantrieb mit einem Zylinder erforderlich, wodurch sich der Steuerungsaufwand erheblich reduzieren läßt.

**Patentansprüche**

1. Doppelseitig wirkendes Schrittschaltwerk mit einem Zahnrad (5) und einem translatorisch zwischen Endlagen hin- und herbewegbaren Schieber (1), der mit wenigstens einer schräggestellten Zahnleitfläche versehen ist, welche sowohl in der einen als auch in der anderen Bewegungsrichtung des Schiebers das Zahnrad jeweils um eine Zahnteilung weiterschaltet und deren Länge und/oder Schrägstellwinkel an die Zahnteilung des Zahnrads angepaßt ist, dadurch gekennzeichnet, daß an dem rechtwinkelig zur Drehebene des Zahnrads (5) hin- und herbewegbaren Schieber (1) eine zweiarmige Schaltklinke (3) mit einer einzigen Zahnleitfläche (4) schwenkbar gelagert ist, welche nach jedem Schaltschritt auf entgegengesetzte, durch je einen Anschlag (16 bzw. 17) des Schiebers begrenzte Schrägstellung umschaltbar ist.

2. Doppelseitig wirkendes Schrittschaltwerk nach Anspruch 1, dadurch gekennzeichnet, daß die beiden Anschläge (16, 17) in der Bewegungsbahn eines mit der Schaltklinke (3) drehfest verbundenen Hebelarms (15) angeordnet sind.

3. Doppelseitig wirkendes Schrittschaltwerk nach Anspruch 1 oder 2, dadurch gekennzeichnet, daß in der Bewegungsbahn eines weiteren Hebelarms (10) der Schaltklinke (3) zwei maschinenfeste Anschläge (11, 12) zum Umschalten der Schaltklinke auf entgegengesetzte Schrägstellung ihrer Zahnleitfläche (4) vorgesehen sind.

4. Doppelseitig wirkendes Schrittschaltwerk nach den Ansprüchen 2 und 3, dadurch gekennzeichnet, daß die beiden Hebelarme (10 bzw. 15) an einem zweiarmigen Hebel (9) ausgebildet sind, welcher rechtwinkelig zur Schaltklinke (3) angeordnet und mit dieser drehfest verbunden ist.

5. Doppelseitig wirkendes Schrittschaltwerk nach Anspruch 4, dadurch gekennzeichnet, daß dem einen (15) der Hebelarme (10, 15) ein die Schaltklinke (3) während der Schaltschritte in ihrer Schrägstellage festhaltende, maschinenfeste Führungsschiene (19) zugeordnet ist.

6. Doppelseitig wirkendes Schrittschaltwerk nach einem der vorhergehenden Ansprüche, dadurch gekennzeichnet, daß der die Schaltklinke (3) tragende Schieber (1) zwei in Bewegungsrichtung des Schiebers verlaufende, spiegelsymmetrische und einseitig offene Schlitze (22, 23) zur Aufnahme desjenigen Zahnes (8a bzw 8b) des Zahnrads (5) hat, welcher dem von der Zahnleitfläche (4) der Schaltklinke jeweils erfaßten Zahn folgt.

7. Doppelseitig wirkendes Schrittschaltwerk nach Anspruch 6, dadurch gekennzeichnet, daß die Schaltklinke (3) in einer Freisparung (24) zwischen den beiden Schlitzen (22, 23) des Schiebers (1) angeordnet ist.

**Claims**

1. Bilateral stepping drive mechanism comprising a toothed wheel (5) and a slide (1) which has a translatory reciprocating motion between end positions and is provided with at least one inclined tooth guiding surface which, both in the one and in the other direction of movement of the slide, advances the toothed wheel in each case by one tooth and the length and/or angle of inclination of which is adapted to the tooth pitch of the toothed wheel, characterized in that a twin arm pawl (3) is mounted pivotably on a slide (1) which has a reciprocating motion perpendicular to the plane of rotation of the toothed wheel (5), which pawl has a single tooth guiding surface (4), which can be switched over to an opposite inclined position, limited in each case by a stop (16 and 17 respectively) of the slide, after each switching step.

2. Bilateral stepping drive mechanism according to Claim 1, characterized in that the two stops (16, 17) are arranged in the path of movement of a lever arm (15) connected fixedly in terms of rotation to the pawl (3).

3. Bilateral stepping drive mechanism according to Claim 1 or 2, characterized in that two stops (11, 12), fixed to the machine, are provided in the path of movement of a further lever arm (10) of the pawl (3) for the switching-over of the pawl to the opposite inclined position of its tooth guiding surface (4).

4. Bilateral stepping drive mechanism according to Claims 2 and 3, characterized in that the two lever arms (10 and 15 respectively) are formed on a twin arm lever (9), which is arranged perpendicular to the pawl (3) and is connected fixedly in terms of rotation to the latter.

5. Bilateral stepping drive mechanism according to Claim 4, characterized in that a guide rail (19), fixed to the machine and securing the pawl (3) in its inclined position during the switching steps, is assigned to the one arm (15) of the lever arms (10, 15).

6. Bilateral stepping drive mechanism according to one of the preceding claims, characterized in that the slide (1) bearing the pawl (3) has two mirror-symmetrical slots (22, 23), open at one end and running in the direction of movement of the slide, for receiving that tooth (8a or 8b) of the toothed wheel (5) which follows the particular tooth taken up by the tooth guiding surface (4) of the pawl.

7. Bilateral stepping drive mechanism according to Claim 6, characterized in that the pawl (3) is arranged in a relief (24) between the two slots (22, 23) of the slide (1).

**Revendications**

1. Mécanisme d'entraînement pas à pas agissant dans les deux sens, avec une roue dentée (5) et un tiroir (1) mobile en translation, en avant et en arrière entre des positions finales, qui possède au moins une surface de guidage de dent disposée de manière inclinée, qui fait avancer la roue dentée à chaque fois de la valeur d'une dent, aussi bien dans une direction de déplacement du tiroir que dans l'autre et dont la longueur et/ou l'angle de position inclinée est adapté à la denture de la roue dentée, caractérisé en ce qu'un cliquet d'entraînement (3) à deux bras, avec une surface de guidage de dent (4) unique, est guidé de manière oscillante sur le tiroir (1), qui se déplace en avant et en arrière perpendiculairement au plan de rotation de la roue dentée (5) et qui est commutable à l'issu du mouvement d'avance, dans la position inclinée opposée, délimitée par chacune des butées (16, respectivement 17) du tiroir.

2. Mécanisme d'entraînement pas à pas agissant dans les deux sens, selon la revendication 1, caractérisé en ce que les deux butées (16, 17) sont disposées dans la trajectoire de déplacement d'un bras de levier (15) relié rigidement en rotation avec un cliquet d'enclenchement (3).

3. Mécanisme d'entraînement pas à pas agissant dans les deux sens, selon la revendications 1 ou 2, caractérisé en ce que deux butées (11, 12) fixes par rapport à la machine sont prévues sur la trajectoire de déplacement d'un autre levier à bras (10) du cliquet d'enclenchement (3), pour inverser le cliquet d'enclenchement en position inclinée opposée de sa surface de guidage de denture (4).

4. Mécanisme d'entraînement pas à pas agissant dans les deux sens, selon les revendications 2 et 3, caractérisé en ce que les deux bras de leviers (10, respectivement 15) sont conformés sur un levier (9), à deux bras, qui est disposé perpendiculairement au cliquet d'enclenchement (3) et est relié rigidement en rotation avec celui-ci.

5.) Mécanisme d'entraînement pas à pas agissant dans les deux sens, selon la revendication 4, caractérisé en ce qu'une glissière de guidage (19) fixe par rapport à la machine et maintenant le cliquet d'entraînement (3) en position inclinée, pendant son déplacement d'avance, est affectée à l'un (15) des bras de levier (10, 15).

6. Mécanisme d'entraînement pas à pas agissant dans les deux sens, selon l'une des revendications précédentes, caractérisé en ce que le tiroir (1) portant le cliquet d'entraînement (3) possède deux fentes (22, 23) ouvertes d'un côté, de symétrie plane et se développant dans la direction du mouvement du tiroir, pour recevoir leur roue (8a, respectivement 8b) provenant de la roue dentée (85), lequel suit la roue qui est saisie à chaque fois par la surface de guidage de roue (4) du cliquet d'entraînement.

7. Mécanisme d'entraînement pas à pas agissant dans les deux sens selon la revendication 6, caractérisé en ce que le cliquet d'entraînement (3) est disposé dans un évidement (24) entre les deux fentes (22, 23) du tiroir (1).

Fig. 1

0 224 502

Fig. 2

Fig. 3